# EUROPÄISCHE PATENTSCHRIFT

(11) **EP 2 160 813 B1**
(45) Veröffentlichungstag und Bekanntmachung des Hinweises auf die Patenterteilung: **13.11.2019**
(21) Anmeldenummer: 08758523.8
(22) Anmeldetag: 15.05.2008
(51) Int. Cl.: H02J 7/14, B60R 16/04

(54) **KRAFTFAHRZEUGBORDNETZ**
MOTOR VEHICLE POWER SUPPLY SYSTEM
RÉSEAU DE BORD POUR VÉHICULE AUTOMOBILE

(30) Priorität: 23.06.2007 DE 102007029025
(43) Veröffentlichungstag der Anmeldung: 10.03.2010
(73) Patentinhaber: Bayerische Motoren Werke Aktiengesellschaft, 80809 München (DE)
(72) Erfinder: PROEBSTLE, Hartmut, 86159 Augsburg (DE); BROESSE, Andreas, 81375 München (DE); POLENOV, Dieter, 80807 München (DE); REITER, Tomas, 80805 München (DE)
(74) Vertreter: Mayer-Martin, Christian
(86) Internationale Anmeldenummer: PCT/EP2008/003879
(87) Internationale Veröffentlichungsnummer: WO 2009/000372

(56) Entgegenhaltungen:
- EP-A- 1 595 748
- DE-A1- 10 230 384
- DE-A1- 10 248 415
- DE-A1- 19 628 222
- DE-B4- 10 262 130
- DE-T5- 10 392 456

## Beschreibung

Die Erfindung betrifft ein Kraftfahrzeugbordnetz.

Durch ein Kraftfahrzeugbordnetz werden verschiedene Verbraucher mit elektrischer Energie versorgt. Zu den Verbrauchern gehören "sensible" Verbraucher, deren Betrieb nur bei möglichst konstanter und/oder hoher Spannung zufrieden stellend möglich ist. Auf der anderen Seite gibt es "kritische Verbraucher", deren Verwendung zu kurzzeitigen hohen Energiebedarfen führt. "Kritische" Verbraucher, wie der Motorstarter oder die elektrische Lenkung, sowie Funktionen, wie die Intelligente Generator Regelung (IGR), können daher signifikante Einbrüche und Schwankungen der Spannung des Kraftfahrzeugbordnetzes verursachen. Neben dem initialen Starten des Motors nach einer Standphase sind auch Motorstarts während des Fahrbetriebs, wie beispielsweise bei Hybridfahrzeugen mit der Option des elektrischen Fahrens oder nach einer MSA(Motor Start-Stopp Automatik)-Stopp-Phase denkbar. Schwankungen oder Einbrüche der Spannung in einem Kraftfahrzeugbordnetz können zur Beeinträchtigung oder zum Ausfall der Funktion sensibler Verbraucher, wie beispielsweise einer Entertainment-Anlage, führen. Ein solcher Funktionsausfall oder eine Funktionsbeeinträchtigung ist bei bestimmten sensiblen Verbrauchern insbesondere während des Fahrbetriebs oder den MSA-Standphasen nicht tolerierbar.

Durch zentrale Maßnahmen, wie die Erhöhung der Kapazität und Leistungsfähigkeit der Batterie (höhere Dimensionierung), wäre zwar eine Einschränkung der Spannungseinbrüche und -schwankungen im Kraftfahrzeugbordnetz infolge des Betriebs kritischer Verbraucher, sowohl während des Fahrbetriebs als auch in Standphasen (Motor aus) möglich. Eine höhere Dimensionierung der Batterie führt aber zu der Zunahme des Fahrzeuggewichts sowie zu höheren Anforderungen an den Bauraumvorhalt. Bei ungünstigen Bedingungen wie tiefer Temperatur und schlechtem Zustand der Batterie wäre selbst eine solche Maßnahme keine Garantie für ungestörten Betrieb sensibler Verbraucher.

Durch eine Anpassung der Generatordimensionierung und -regelung (mehr Leistung, schnellere Reaktion) wäre ebenfalls eine Einschränkung der Spannungseinbrüche und -schwankungen während des Fahrbetriebs möglich. Eine Erhöhung der Generatordimensionierung und Anpassung seiner Regelung führt aber nicht zur Reduzierung von Spannungsschwankungen und -einbrüchen währen der Phasen mit abgestelltem Motor (wie beim MSA-Stopp). Außerdem würden eine Erhöhung der Generatordimensionierung und eine Anpassung seiner Regelung zu spürbaren störenden Momentenrückwirkungen auf den Motor führen (unruhiger Lauf).

Auch durch eine den sensiblen Verbrauchern im Versorgungspfad vorgeschaltete permanent betriebene Spannungsregelungsstufe, wie sie beispielsweise in DE 101 49 111 A1 oder DE 100 19 847 A1 beschrieben wird, wäre die Bereitstellung einer stabilen Versorgungsspannung möglich. Der Einsatz einer solchen Spannungsregelungsstufe gewährleistet die Stabilisierung der Versorgung der sensiblen Verbraucher aber auf Kosten eines höheren kumulativen Energieaufwands. Die Verluste in der Spannungsregelungsstufe werden in Wärme umgewandelt, welche nur mit einem hohen technischen Aufwand abgeführt werden können.

Durch eine Entkopplung der kritischen Verbraucher in separate gepufferte Teilbordnetze, ist eine Entlastung des Basisbordnetzes und eine Einschränkung der Spannungseinbrüche und Spannungsschwankungen möglich (DE 102 59 879 A1). Eine solche Entkopplung der kritischen Verbraucher erfordert aber zusätzliche Energiespeicher mit hoher Kapazität und Leistungsfähigkeit sowie gegebenenfalls elektronische Komponenten zur Speisung solcher Speicher und Verbraucher.

Aus der DE10262130B4 ist ein Kraffahrzeugbordnetz mit zwei Bordnetzzweigen bekannt.

Auch aus der DE10248415A1 ist ein Kraffahrzeugbordnetz mit zwei Bordnetzzweigen bekannt.

Der vorliegenden Erfindung liegt daher die Aufgabe zu Grunde, ein einfaches, insbesondere ökonomisch herstellbares, Kraftfahrzeugbordnetz mit verschiedenen, insbesondere "kritischen" und "sensiblen", Verbrauchern anzugeben, durch das die Verbraucher energieeffizient und zuverlässig mit der nötigen elektrischen Energie versorgt werden.

Diese Aufgabe wird durch die Merkmale des Patentanspruchs 1 gelöst. Vorteilhafte Ausgestaltungen der Erfindung sind Gegenstand der abhängigen Ansprüche.

Ein erfindungsgemäßes Kraftfahrzeugbordnetz weist einen ersten Bordnetzzweig oder Bordnetzbereich auf, der einen ersten, insbesondere "kritischen", elektrischen Verbraucher und eine parallel dazu geschaltete Spannungsquelle enthält, und der einen zweiten Bordnetzweig oder Bordnetzbereich, der einen zweiten, insbesondere "sensiblen", Verbraucher enthält. Der Ausdruck "Verbraucher" steht im Rahmen der Erfindung stellvertretend für einen Verbraucher oder eine Gruppe von Verbrauchern.

Zudem ist ein Gleichspannungswandler vorgesehen, durch den der erste Bordnetzzweig mit dem zweiten Bordnetzzweig koppelbar ist, insbesondere um den zweiten Verbraucher mit einer gegenüber der Spannung im ersten Bordnetzzweig stabileren Spannung zu versorgen. Durch eine parallel zum Gleichspannungswandler geschaltete erste Schalteinrichtung, kann der Gleichspannungswandler im geschlossenen Schaltzustand (der Schalteinrichtung) hinsichtlich des zweiten Verbrauchers überbrückt werden.

Durch die erste Schalteinrichtung kann also der zweite Verbraucher auch ohne Zwischenschaltung des Gleichspannungswandlers mit Energie versorgt werden. Insbesondere kann der zweite Verbraucher über die erste Schalteinrichtung bei inaktivem Gleichspannungswandler niederimpedant an den ersten Bordnetzzweig angebunden werden. Dadurch werden elektrische Verluste, die in einem Gleichspannungswandler auftreten, zeitweise (bei geschlossener erster Schalteinrichtung) reduziert oder sogar vermieden.

Insbesondere im ersten Bordnetzzweig kann neben dem ersten, insbesondere "kritischen", elektrischen Verbraucher noch ein weiterer, insbesondere "unsensibler" Verbraucher enthalten sein.

Der zweite Bordnetzzweig enthält einen Kondensator, der durch eine zweite Schalteinrichtung parallel zum zweiten Verbraucher schaltbar oder von dem zweiten Verbraucher derart entkoppelbar ist, dass der Ladezustand des Kondensators gezielt einstellbar oder diagnostizierbar ist. Dadurch kann auch der Kondensator als Energiespeicher bedarfsgerecht dem zweiten Verbraucher zugeschaltet werden oder von diesem getrennt werden. Bevorzugt ist dabei ein Knoten zwischen dem Kondensator und der zweiten Schalteinrichtung vorgesehen, mit dem der Gleichspannungswandler insbesondere ausgangsseitig verbunden ist.

Gemäß einer bevorzugten Weiterbildung erfolgt eine Aufladung des Kondensators bevorzugt dann über den Gleichspannungswandler, wenn die erste und/oder zweite Schalteinrichtung geöffnet ist.

Vorzugsweise wird der Gleichspannungswandler hinsichtlich des Kondensators überbrückt, wenn sich die erste Schalteinrichtung und die zweite Schalteinrichtung im geschlossenen Schaltzustand befinden.

Der Gleichspannungswandler und/oder der Kondensator ist gemäß einer vorteilhaften Ausgestaltung durch die zweite Schalteinrichtung von dem zweiten Verbraucher entkoppelbar.

Besonders vorteilhaft ist die Erfindung dann, wenn es sich bei dem Kondensator um einen Supercap oder Doppelschichtkondensator handelt. Zumindest ist es zur zeitweisen Energieversorgung eines zweiten Verbrauchers in einem Kraftfahrzeugbordnetz von Vorteil, wenn die Kapazität des Kondensators größer als 50 Millifarad ist.

Die Energiequelle umfasst vorzugsweise einen Generator, eine Fahrzeugbatterie (Akku) und/oder einen, insbesondere über einen weiteren Gleichspannungswandler, an das Kraftfahrzeugbordnetz angekoppelten Hochvoltbordnetzzweig. Im zuletzt genannten Fall sind Bordnetzarchitekturen möglich, bei denen im Kraftfahrzeugbordnetz (Niedervoltbordnetz) ein Generator und/oder Motor-Starter nicht erforderlich sind.

Die Erfindung ist besonders vorteilhaft im Rahmen eines Kraftfahrzeuges mit einer so genannten Motor-Start-Stopp-Automatik. Dabei wird der Motor des Kraftfahrzeuges automatisch bei einer Vielzahl von Fahrzeugstillstand-Situationen gestoppt und anschließend automatisch wieder gestartet. Bei bekannten Bordnetzen führt der hohe Leistungsbedarf des Motor-Starters beim Startvorgang, insbesondere beim Anlassen des Motors, regelmäßig zu Spannungsschwankungen im Kraftfahrzeugbordnetz mit negativen Auswirkungen auf die übrigen Verbraucher. Insbesondere daher enthält der erste Bordnetzweig, insbesondere als "kritischen Verbraucher" und/oder ersten Verbraucher, einen Motor-Starter, von dem dann der zweite Verbraucher entkoppelbar ist.

Besonders bevorzugt ist eine Steuereinrichtung, wie beispielsweise eine Prozessoreinrichtung, zur Steuerung der ersten und/oder zweiten Schalteinrichtung vorgesehen, die beispielsweise programmtechnisch derart eingerichtet ist, dass sich die erste Schalteinrichtung während einer Motorstart-Phase (beispielsweise bei aktivem Motor-Anlasser) oder bei einem Spannungseinbruch insbesondere im ersten Bordnetzzweig im offenen Schaltzustand befindet, und sich vorzugsweise bei eingeschaltetem oder laufendem Motor (Verbrennungsmotor) in der Regel im geschlossenen Schaltzustand befindet. Die Steuereinrichtung kann auch Teil des Gleichspannungswandlers sein. Während die erste Schalteinrichtung geöffnet ist, kann der zweite Verbraucher und/oder der Kondensator über den Gleichspannungswandler mit Energie versorgt werden.

Insbesondere wird die erste Schalteinrichtung mit (kurz davor oder kurz danach) dem Beginn eines Motor-Start-Vorganges (Motor-Starter aktiv) geöffnet und mit (kurz davor oder kurz danach) dem Ende eines Motor-Start-Vorganges geschlossen. Ergänzend dazu ist vorteilhafterweise die Steuereinrichtung derart eingerichtet, dass die erste Schalteinrichtung geschlossen ist, während der Motor ausgeschaltet ist, und/oder während das Fahrzeug still steht.

Vorzugsweise ist die Steuereinrichtung derart eingerichtet, dass sich die zweite Schalteinrichtung während einer Motorstart-Phase oder bei einem Spannungseinbruch insbesondere im ersten Bordnetzzweig im geschlossenen Schaltzustand befindet, und vorteilhafterweise bei eingeschaltetem und/oder ausgeschaltetem Motor in der Regel ebenfalls geschlossen ist. Dadurch ist es möglich den zweiten Verbraucher durch den Kondensator mit Energie zu speisen und so unabhängig von hohen insbesondere kurzzeitigen Energiebedarfen im ersten Bordnetzzweig zuverlässig zu betreiben. Der Gleichspannungswandler kann dadurch kleiner ausgelegt sein.

Besonders bevorzugt wird die zweite Schalteinrichtung in den geöffneten Schaltzustand versetzt, sobald die Spannung des Kondensators unter einen vorgegebenen Schwellenwert fällt. Insbesondere wenn die erste Schalteinrichtung zur gleichen Zeit geschlossen ist, wird dann der zweite Verbraucher aus dem ersten Bordnetzzweig mit Energie versorgt ohne über die zweite Schalteinrichtung Energie an den Kondensator zu verlieren.

Ausführungsbeispiele der Erfindung werden nachfolgend anhand von Zeichnungen näher erläutert. Es zeigen:
- Fig. 1: eine vereinfachte Darstellung eines Ausschnittes eines Kraftfahrzeugbordnetzes;
- Fig. 2: zeitliche Verläufe der Bordnetzspannungen und zugeordneter Motorzustand und Schaltzustand der ersten Schalteinrichtung;
- Fig. 3: eine vereinfachte Darstellung eines Kraftfahrzeugbordnetzes mit Kondensator;
- Fig. 4: eine vereinfachte Darstellung eines Kraftfahrzeugbordnetzes mit Kondensator, das an ein Hochvoltbordnetz gekoppelt ist.
- Fig. 5: zeitliche Verläufe der Bordnetzspannung und des Schaltzustandes der ersten Schalteinrichtung;
- Fig. 6: zeitliche Verläufe der Bordnetzspannung und des Schaltzustandes der ersten Schalteinrichtung;
- Fig. 7: zeitliche Verläufe der Bordnetzspannungen, zugeordneter Motorzustand und Schaltzustände der ersten und zweiten Schalteinrichtung.

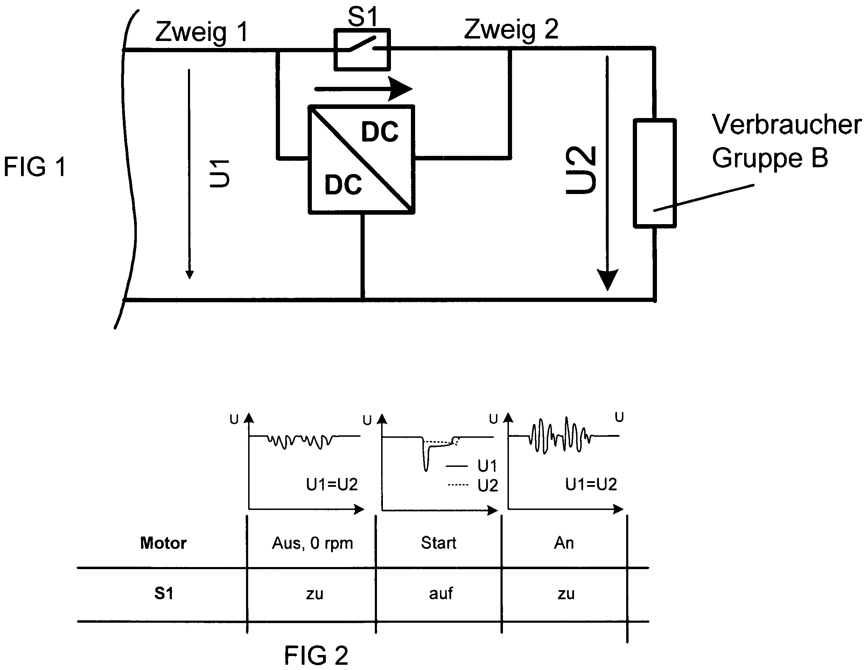

Figur 1 zeigt einen Ausschnitt eines Kraftfahrzeugbordnetzes mit einem ersten Bordnetzweig (Zweig 1), der eine Spannungsquelle und einen ersten "kritischen" Verbraucher (nicht dargestellt), wie einen Motor-Starter, enthält, und einem zweiten Bordnetzzweig (Zweig 2), der einen zweiten "sensiblen" Verbraucher (Verbraucher Gruppe B), wie beispielsweise Entertainment-Geräte, enthält.

Die beiden Bordnetzzweige sind durch einen Gleichspannungswandler DC/DC miteinander gekoppelt, wobei der Gleichspannungswandler DC/DC durch eine erste Schalteinrichtung S1 überbrückbar ist.

Die Spannung U2 im zweiten Bordnetzzweig wird gegenüber der Spannung U1 im ersten Bordnetzzweig durch folgende anhand von Figur 2 erläuterte Betriebsstrategie stabilisiert.

Bei ausgeschaltetem Motor (0 rpm) ist die erste Schalteinrichtung S1, die durch eine nicht dargestellte Steuereinrichtung angesteuert wird, geschlossen (zu). Die Spannungen U1, U2 sind in beiden Bordnetzzweigen in etwa identisch und schwanken leicht.

Durch die Aktivierung des Motor-Starters (Start) ergibt sich ein starker Spannungseinbruch in U1. Dieser wirkt sich nicht auf U2 aus, da die erste Schalteinrichtung S1 mittelbar oder unmittelbar ausgelöst durch den Befehl zum Motor-Start oder ausgelöst durch den erkannten einsetzenden starken Spannungseinbruch in U1 geöffnet wird (auf).

Nach der Deaktivierung des Motor-Starters oder bei eingeschaltetem Motor (An) stabilisiert sich die Spannung U1 wieder. Die erste Schalteinrichtung S1 wird mittelbar oder unmittelbar ausgelöst durch das Deaktivieren des Motor-Starters oder ausgelöst durch die erkannte stabilisierte Spannung U1 wieder geschlossen. Die Spannungen U1, U2 sind in beiden Bordnetzzweigen wieder in etwa identisch und schwanken leicht.

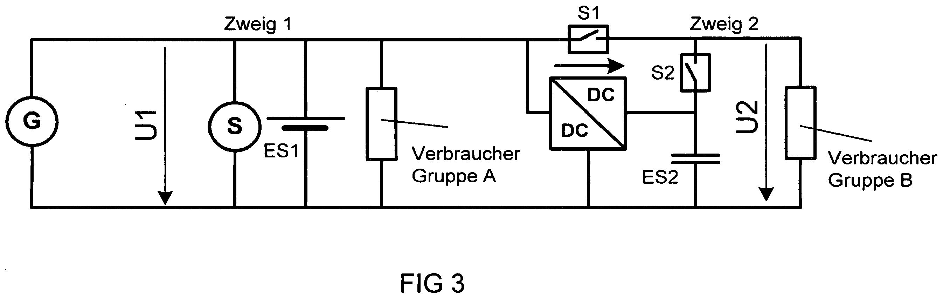

Eine Weiterbildung dieses Bordnetzes ist in Figur 3 dargestellt. Der erste Bordnetzzweig (Zweig 1) beinhaltet einen ersten "kritischen" Verbraucher, wie einen Motor-Starter S, einen zweiten "unsensiblen" Verbraucher (Verbrauchergruppe A), einen Energieerzeuger oder Energieeinspeiser, wie einen Generator G, und optional einen Energiespeicher ES1, wie eine KFZ-Batterie, insbesondere einen Akku.

Der zweite Bordnetzzweig (Zweig 2) beinhaltet einen zweiten "sensiblen" Verbraucher (Verbrauchergruppe B) sowie einen Energiespeicher ES2, wie einen Kondensator oder Supercap. Der zweite Bordnetzzweig kann mittels der ersten Schaltvorrichtung S1 vom ersten Bordnetzzweig getrennt werden oder daran angeschlossen werden.

Der Energiespeicher ES2 kann mittels eines Gleichspannungswandlers DC/DC aus dem ersten Bordnetzzweig geladen werden und mittels einer zweiten Schaltvorrichtung S2 vom zweiten Verbraucher getrennt werden oder daran angeschlossen werden.

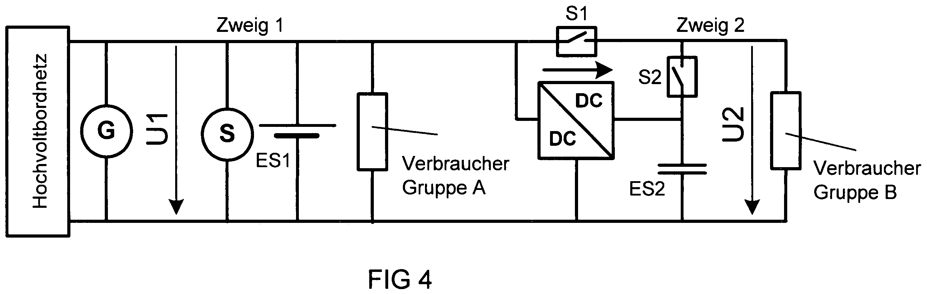

Ein weiteres Ausführungsbeispiel, das in Figur 4 dargestellt ist, zeigt ein Bordnetz, das dem Bordnetz in Figur 3 entspricht, das aber aus einem weiteren Bordnetz, wie beispielsweise einem Hochvoltbordnetz, wie es in Hybrid- und Elektrofahrzeugen vorhanden sein, insbesondere über einen DC/DC-Wandler und/oder über einen Generator mit Energie gespeist wird. Bei ausschließlicher Energie-Versorgung aus dem zusätzlichen Bordnetz, kann der Generator G in Zweig 1 entfallen. Bei Hybridfahrzeugen, bei welchen der Verbrennungsmotor ausschließlich mit einer E-Maschine gestartet wird, die vom Hochvoltbordnetz gespeist wird, kann der Starter S im Zweig 1 ebenfalls entfallen. In diesem Fall wäre der erste "kritische" Verbraucher" eine andere Fahrzeugkomponente, wie beispielsweise eine elektrische Lenkung, ein Schiebedach oder ein Fensterheber.

Es wird im Folgenden eine mit diesen Bordnetzen umsetzbare Betriebsstrategie beschrieben, welche es ermöglicht, die "sensiblen" Verbraucher (zweiter Verbraucher) während eines Spannungseinbruchs im ersten Bordnetzzweig vom ersten Bordnetzzweig, der den kritischen Verbraucher enthält, abzukoppeln und mit einer stabilisierten und/oder gepufferten Spannung zu versorgen.

Die erste Schalteinrichtung S1 dient dabei der Entkopplung des zweiten Bordnetzzweiges vom ersten Bordnetzzweig. Die zweite Schaltvorrichtung S2 dient dem bedarfsgerechten Trennen und Zuschalten des Energiespeichers ES2. Beide werden durch eine nicht dargestellte Steuereinrichtung angesteuert.

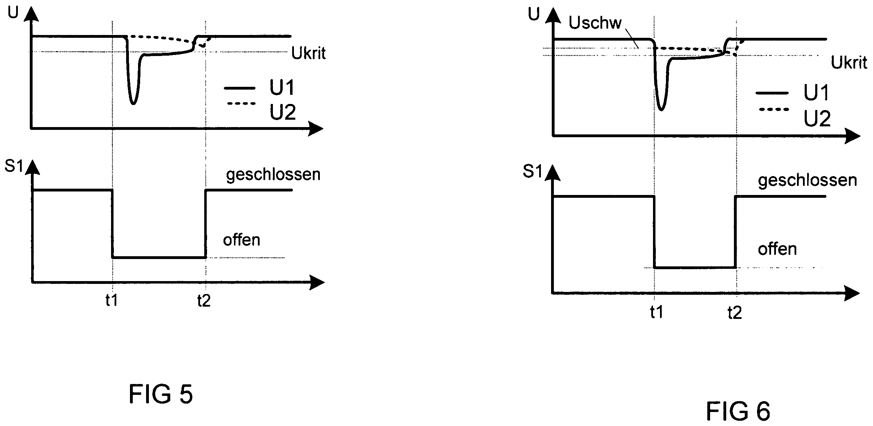

Die anhand von Figur 5 erläuterte Betriebsstrategie basiert auf einer Entkopplung und Stabilisierung der Spannung U2 mit Hilfe eines Steuersignals. Es sind die zeitlichen Verläufe der Spannungen U1 und U2 und der zugehörige Schaltzustand der ersten Schalteinrichtung S1 angegeben.

Der Schalter S1 wird zum Zeitpunkt t1 geöffnet (offen). Für t>t1 tritt eine Spannungsstörung im ersten Bordnetzzweig auf. Für die Zeit t1 < t < t2 wird U2 mittels des Speichers ES2 gestützt (S2 geschlossen) und/oder mittels des DC/DC-Wandlers stabilisiert. Die Spannungsuntergrenze Ukrit wird während dieser Zeit von U2 nicht unterschritten. Eine derartige Ansteuerung der Schalteinrichtungen kann beispielsweise auf einem Steuersignal, welches einer Spannungsstörung im ersten Bordnetzzweig vorauseilt (z.B. KI.50 während des Motorstarts), basieren.

Die anhand von Figur 6 erläuterte Betriebsstrategie basiert auf einer Entkopplung und Stabilisierung der Spannung U2 mit Hilfe einer Störungserkennung.

Zum Zeitpunkt t1 tritt eine Spannungsstörung im ersten Bordnetzzweig auf. Unmittelbar nach dem Unterschreiten des vorgegebenen Schwellenwertes Uschw durch die Spannung U1 wird die erste Schalteinrichtung S1 geöffnet (offen). Nach Abklingen der Störung im ersten Bordnetzzweig wird die erste Schalteinrichtung S1 wieder geschlossen. Für die Zeit, in welcher die erste Schalteinrichtung S1 offen ist, wird U2 mittels des Energie-Speichers ES2 gestützt und/oder mittels des DC/DC-Wandlers stabilisiert, sodass U2 einen kritischen Wert Ukrit nicht unterschreitet. Die Detektion des Spannungseinbruchs kann dabei im DC/DC-Wandler oder einem anderen Steuergerät erfolgen.

Durch die Stützung des DC/DC-Wandlers bei der Bereitstellung der für den zweiten Verbraucher erforderlichen Spitzenleistungen durch den Energie-Speicher ES2 kann der des DC/DC-Wandler mit einer geringeren Maximal-Leistung ausgeführt sein. Dies ermöglicht eine ökonomische Umsetzung der Erfindung. Vorzugsweise ist der Energie-Speicher ES2 als kapazitiver Energiespeicher, insbesondere als Doppelschichtkondensator, mit einer Kapazität größer als 50mF ausgeführt, um die erforderliche Maximal-Leistung des DC/DC-Wandlers reduzieren zu können.

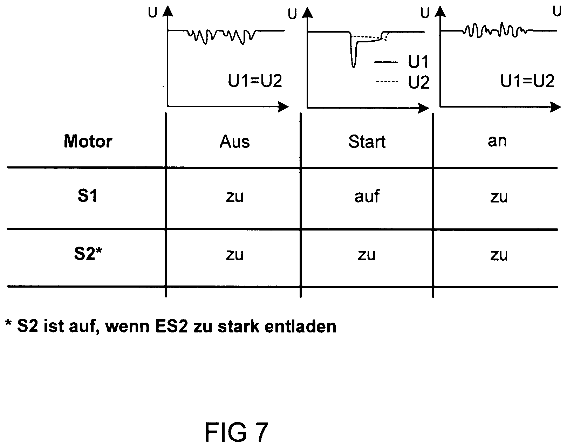

Figur 7 zeigt die zeitlichen Verläufe der Spannungen U1 und U2 und die zugehörige Schaltzustände der ersten Schalteinrichtung S1 und der zweiten Schalteinrichtung S2. Die Schaltzustände der ersten Schalteinrichtung S1 entsprechen den anhand der Figuren 5 oder 6 erläuterten Schaltzuständen.

Die zweite Schalteinrichtung S2 ist in der Regel geschlossen, um insbesondere dann, wenn der DC/DC-Wandler inaktiv ist und/oder die erste Schalteinrichtung S1 geschlossen ist, die Spannung im ersten und/oder zweiten Bordnetzzweig durch den Kondensator ES2 zu stützen oder zu stabilisieren.

Mit der zweiten Schalteinrichtung S2 lässt sich der Energiespeicher ES2 von dem ersten und zweiten Verbraucher abkoppeln, um den Ladezustand des Energiespeichers ES2 gezielt einzustellen, und gegebenenfalls eine Diagnose des Energiespeichers ES2 zu ermöglichen.

Außerdem können durch eine Öffnung der zweiten Schalteinrichtung S2 Standby-Verluste insbesondere durch den Energiespeichers ES2 reduziert werden.

Zudem ist ein Betrieb des zweiten Verbrauchers auch möglich, wenn der Speicher ES2 entladen ist (S1 geschlossen, S2 offen). Dadurch wird die Energieverfügbarkeit für den zweiten Verbraucher insgesamt erhöht.

Schließlich wird die zweite Schalteinrichtung S2 derart angesteuert, dass die Schalteinrichtung geöffnet wird, wenn die Ladung des Energiespeichers ES2 unter einen vorgegebenen oder relativ zu U1 oder U2 bestimmten Grenzwert gefallen ist. Denn in diesem Fall kann der Energiespeicher zur Stabilisierung der Spannung nichts beitragen. Der Ladezustand des Energiespeichers ES2 kann dann gezielt in Abhängigkeit von U1 oder U2 eingestellt werden.

Während der Zeitspannen, in welchen die Versorgung der sensiblen Verbraucher nicht stabilisiert werden muss, hat der zusätzliche Energiespeicher ES2 eine stabilisierende/glättende Wirkung für die Spannung im gesamten Bordnetz. Die Spitzenlastfähigkeit des gesamten Bordnetzes ist dann höher, das Generatorregelverhalten stetiger und effizienter und die Momentenrückwirkung auf den Verbrennungsmotor weniger auffällig. Der zur Pufferung eingesetzte Energiespeicher ES2 muss energetisch nur für die kurzzeitige Versorgung der sensiblen Verbraucher (Verbrauchergruppe B) ausgelegt werden. Die Entkopplung der des zweiten Verbrauchers (Verbrauchergruppe B) vom ersten Bordnetzzweig während der Einbrüche von U1 führt zu einer Entlastung des ersten Bordnetzzweiges im Augenblick der energetischen Unterdeckung, sofern der Energiespeicher ES2 einen Teil der Vorsorgungsenergie für diese Verbraucher liefert.

Der über die erste Schalteinrichtung entkoppelbare oder durch den Gleichspannungswandler oder den Kondensator gestützte zweite Verbraucher (Verbrauchergruppe B) umfasst vorzugsweise eine oder mehrere der folgenden Komponenten:
- Steuergeräte mit MOST Anbindung,
- USB-Schnittstelle;
- Infotainment (Radio, Displays, etc.),
- Klimagebläse,
- EI. Fensterheber, Schiebedach,
- Innenlichtumfänge,
- Außenlichtumfänge,
- Scheibenwischer.

## Patentansprüche

1. Kraftfahrzeugbordnetz
- mit einem ersten Bordnetzzweig, der einen ersten elektrischen Verbraucher (S) und eine parallel dazu geschaltete Spannungsquelle enthält,
- mit einem zweiten Bordnetzweg, der einen zweiten Verbraucher (B) enthält,
- mit einem Gleichspannungswandler (DC/DC), durch den der erste Bordnetzzweig mit dem zweiten Bordnetzzweig koppelbar ist, und
- mit einer parallel zum Gleichspannungswandler (DC/DC) geschalteten ersten Schalteinrichtung (S1), durch die im geschlossenen Schaltzustand der Gleichspannungswandler (DC/DC) hinsichtlich des zweiten Verbrauchers (B) überbrückt wird,
wobei der zweite Bordnetzzweig einen Kondensator (ES2) enthält,
**gekennzeichnet dadurch,**
**dass** der Kondensator (ES2) durch eine zweite Schalteinrichtung (S2) parallel zum zweiten Verbraucher (B) schaltbar oder von dem zweiten Verbraucher derart entkoppelbar ist, dass der Ladezustand des Kondensators (ES2) gezielt einstellbar oder diagnostizierbar ist.

2. Kraftfahrzeugbordnetz nach Anspruch 1,
mit einem Knoten zwischen dem Kondensator (ES2) und der zweiten Schalteinrichtung (S2), mit dem der Gleichspannungswandler verbunden ist.

3. Kraftfahrzeugbordnetz nach einem der vorhergehenden Ansprüche,
bei dem der Kondensator (ES2) über den Gleichspannungswandler (DC/DC) aufladbar ist, wenn sich die erste und/oder zweite Schalteinrichtung (S1, S2) im geöffneten Schaltzustand befindet.

4. Kraftfahrzeugbordnetz nach einem der vorhergehenden Ansprüche,
- bei dem der Gleichspannungswandler (DC/DC) hinsichtlich des Kondensators (ES2) überbrückt wird, wenn sich die erste Schalteinrichtung (S1) und die zweite Schalteinrichtung (S2) im geschlossenen Schaltzustand befinden.

5. Kraftfahrzeugbordnetz nach einem der vorhergehenden Ansprüche,
- bei dem der Gleichspannungswandler (DC/DC) durch die zweite Schalteinrichtung (S2) von dem zweiten Verbraucher (B) entkoppelbar ist.

6. Kraftfahrzeugbordnetz nach einem der vorhergehenden Ansprüche, bei dem der Kondensator einen Doppelschichtkondensator oder Supercap umfasst.

7. Kraftfahrzeugbordnetz nach einem der vorhergehenden Ansprüche, bei dem die Energiequelle, insbesondere die Spannungsquelle, einen Generator, eine Fahrzeugbatterie und/oder einen, insbesondere über einen weiteren Gleichspannungswandler (DC/DC) angekoppelten, Hochvoltbordnetzzweig umfasst.

8. Kraftfahrzeugbordnetz nach einem der vorhergehenden Ansprüche, bei dem der erste Bordnetzweig, insbesondere der erste Verbraucher, einen Motor-Starter enthält.

9. Kraftfahrzeugbordnetz nach einem der vorhergehenden Ansprüche, mit einer Steuereinrichtung zur Steuerung der ersten und/oder zweiten Schalteinrichtung (S1, S2), die derart eingerichtet ist, dass sich die erste Schalteinrichtung während eines Spannungseinbruchs, insbesondere während einer Motorstart-Phase, im offenen Schaltzustand befindet.

10. Kraftfahrzeugbordnetz nach einem der vorhergehenden Ansprüche, bei dem die Steuereinrichtung derart eingerichtet ist, dass sich die zweite Schalteinrichtung (S2) während eines Spannungseinbruchs, insbesondere während einer Motorstart-Phase, im geschlossenen Schaltzustand befindet.

11. Kraftfahrzeugbordnetz nach einem der vorhergehenden Ansprüche, bei dem die Steuereinrichtung derart eingerichtet ist, dass die zweite Schalteinrichtung (S2) in den geöffneten Schaltzustand versetzt wird, sobald die Spannung des Kondensators (ES2) unter einen vorgegebenen Schwellenwert fällt.

## Claims

1. A motor vehicle electrical system
- with a first vehicle electrical system branch which contains a first electrical consumer (S) and a voltage source connected in parallel thereto,
- with a second vehicle electrical system branch which contains a second consumer (B),
- with a direct voltage converter (DC/DC), by which the first vehicle electrical system branch can be coupled with the second vehicle electrical system branch, and
- with a first switching device (S1) connected in parallel to the direct voltage converter (DC/DC), through which device in the closed switching state the direct voltage converter (DC/DC) is bridged with respect to the second consumer (B),
wherein the second vehicle electrical system branch contains a capacitor (ES2), **characterised in that**
the capacitor (ES2) can be connected in parallel to the second consumer (B) by a second switching device (S2) or can be decoupled from the second consumer such that the charge state of the capacitor (ES2) can be specifically set or diagnosed.

2. A motor vehicle electrical system according to Claim 1,
with a node between the capacitor (ES2) and the second switching device (S2), to which node the direct voltage converter is connected.

3. A motor vehicle electrical system according to one of the preceding claims,
in which the capacitor (ES2) can be charged by way of the direct voltage converter (DC/DC) if the first and/or second switching device (S1, S2) is/are in the opened switching state.

4. A motor vehicle electrical system according to one of the preceding claims,
- in which the direct voltage converter (DC/DC) is bridged with respect to the capacitor (ES2) if the first switching device (S1) and the second switching device (S2) are in the closed switching state.

5. A motor vehicle electrical system according to one of the preceding claims,
- in which the direct voltage converter (DC/DC) can be decoupled from the second consumer (B) by the second switching device (S2).

6. A motor vehicle electrical system according to one of the preceding claims,
in which the capacitor comprises a double-layer capacitor or supercap.

7. A motor vehicle electrical system according to one of the preceding claims,
in which the energy source, especially the voltage source, comprises a generator, a vehicle battery and/or a high-voltage vehicle electrical system branch, especially coupled by way of a further direct voltage converter (DC/DC).

8. A motor vehicle electrical system according to one of the preceding claims,
in which the first vehicle electrical system branch, especially the first consumer, contains a motor starter.

9. A motor vehicle electrical system according to one of the preceding claims, with a control device for controlling the first and/or second switching device (S1, S2) which is set up such that the first switching device during a voltage dip, especially during a motor starting phase, is in the open switching state.

10. A motor vehicle electrical system according to one of the preceding claims, in which the control device is set up such that the second switching device (S2) during a voltage dip, especially during a motor starting phase, is in the closed switching state.

11. A motor vehicle electrical system according to one of the preceding claims, in which the control device is set up such that the second switching device (S2) is set into the opened switching state as soon as the voltage of the capacitor (ES2) drops below a specified threshold value.

## Revendications

1. Réseau de bord de véhicule automobile comprenant :
- une première branche de réseau de bord ayant un premier consommateur électrique (S) et une source de tension branchée en parallèle,
- une seconde branche de réseau de bord comportant un second consommateur (B),
- un convertisseur de tension continue (DC/DC) qui peut coupler la première branche de réseau de bord à la seconde branche de réseau de bord, et
- une première installation de commutation (S1) branchée en parallèle sur le convertisseur de tension continue (DC/DC) qui, à l'état fermé, court-circuite le convertisseur de tension continue (DC/DC) par rapport au second consommateur (B),
la seconde branche de réseau de bord comportant un condensateur (ES2),
**caractérisé en ce que**
le condensateur (ES2) est commuté par une seconde installation de commutation (S2) en parallèle sur le second consommateur (B) ou peut être découplé du second consommateur de façon que l'état de charge du condensateur (ES2) puisse être réglé de façon ciblée ou être diagnostiqué lorsque la première et/ou la seconde installation(s) de commutation (S1, S2) se trouvent à l'état ouvert.

2. Réseau de bord de véhicule automobile selon la revendication 1, comportant un nœud entre le condensateur (ES2) et la seconde installation de commutation (S2), ce nœud étant relié au convertisseur de tension continue.

3. Réseau de bord de véhicule automobile selon l'une des revendications précédentes, dans lequel le condensateur (ES2) est chargé par l'intermédiaire du convertisseur de tension continue (DC/DC) lorsque la première et/ou la seconde installation(s) de commutation (S1, S2) se trouvent à l'état ouvert.

4. Réseau de bord de véhicule selon l'une des revendications précédentes,
dans lequel le convertisseur de tension continue (DC/DC) est court-circuité par le condensateur (ES2) lorsque la première installation de commutation (S1) et la seconde installation de commutation (S2) sont à l'état fermé.

5. Réseau de bord de véhicule selon l'une des revendications précédentes,
selon lequel
le convertisseur de tension continue (DC/DC) est découplé du second consommateur (B) par la seconde installation de commutation (S2).

6. Réseau de bord de véhicule selon l'une des revendications précédentes,
selon lequel
le condensateur comprend un condensateur à double couche ou un condensateur supercap.

7. Réseau de bord de véhicule selon l'une des revendications précédentes,
**caractérisé en ce que**
la source d'énergie, notamment la source de tension comprend un générateur, une batterie de véhicule et/ou un réseau de bord haute tension, couplé par l'intermédiaire d'un autre convertisseur de tension continue (DC/DC).

8. Réseau de bord de véhicule selon l'une des revendications précédentes,
selon lequel la première branche de réseau notamment le premier consommateur est un moteur-démarreur.

9. Réseau de bord de véhicule selon l'une des revendications précédentes,
comportant une installation de commande pour commander la première et/ou la seconde installation de commutation (S1/S2) qui sont installées pour que la première installation de commutation se trouve à l'état ouvert pendant une rupture de tension, notamment pendant une phase de démarrage de moteur.

10. Réseau de bord de véhicule selon l'une des revendications précédentes,
selon lequel
l'installation de commande est conçue pour que la seconde installation de commutation (S2) se trouve à l'état fermé pendant un effondrement de la tension, notamment pendant une phase de démarrage de moteur.

11. Réseau de bord de véhicule selon l'une des revendications précédentes,
selon lequel l'installation de commande est conçue pour que la seconde installation de commutation (S2) soit mise à l'état ouvert dès que la tension du condensateur (ES2) descend en dessous d'un seuil prédéfini.
